# EUROPÄISCHE PATENTSCHRIFT

(11) **EP 3 106 625 B1**
(45) Veröffentlichungstag und Bekanntmachung des Hinweises auf die Patenterteilung: **17.04.2019**
(21) Anmeldenummer: 16167316.5
(22) Anmeldetag: 27.04.2016
(51) Int. Cl.: F01D 17/16

(54) **VARIABLE TURBINEN- ODER VERDICHTERGEOMETRIE FÜR EINEN ABGASTURBOLADER**
VARIABLE TURBINE OR COMPRESSOR GEOMETRY FOR AN EXHAUST-GAS TURBOCHARGER
GEOMETRIE VARIABLE DE COMPRESSEUR OU DE TURBINE POUR UN TURBO-COMPRESSEUR

(30) Priorität: 28.05.2015 DE 102015209813
(43) Veröffentlichungstag der Anmeldung: 21.12.2016
(73) Patentinhaber: BMTS Technology GmbH & Co. KG, 70376 Stuttgart (DE)
(72) Erfinder: MARTENS, Anatolij, 73054 Eislingen (DE)
(74) Vertreter: BRP Renaud & Partner mbB Rechtsanwälte Patentanwälte Steuerberater

(56) Entgegenhaltungen:
- WO-A2-2009/065763
- DE-A1- 10 209 444
- US-A1- 2003 170 117

## Beschreibung

Die vorliegende Erfindung betrifft eine variable Turbinen- oder Verdichtergeometrie für einen Abgasturbolader gemäß Anspruch 1. Die Erfindung betrifft außerdem einen Abgasturbolader mit einer solchen variablen Turbinen- oder Verdichtergeometrie gemäß Anspruch 7, sowie ein Verfahren zur Montage einer solchen Turbinen- oder Verdichtergeometrie gemäß Anspruch 8.

Für variable Turbinen- oder Verdichtergeometrien gibt es prinzipiell zwei alternative Möglichkeiten der Lagerung eines Verstellrings am Schaufellagerring. Die erste Möglichkeit ist dabei eine Gleitlagerung, welche zwar fertigungstechnisch einfach herzustellen ist, jedoch vergleichsweise große Stellkräfte erfordert. Die andere Möglichkeit hierzu stellt die sogenannte Rollenlagerung dar, bei welcher der Verstellring über mehrere Rollen am Schaufellagerring gelagert ist. Hiermit können zwar vergleichsweise geringe Stellkräfte realisiert werden, die technische Realisierung einer derartigen rollengelagerten variablen Turbinen- oder Verdichtergeometrie ist jedoch wiederum vergleichsweise aufwändig und damit auch teuer.

Aus der DE 102 62 006 B4 ist eine gattungsgemäße variable Turbinen- oder Verdichtergeometrie für einen Abgasturbolader mit einem Schaufellagerring bekannt, an dem einzelne Leitschaufeln drehbar gelagert sind. Zusätzlich vorgesehen ist ein Verstellring zum simultanen Verstellen der einzelnen Leitschaufeln, wobei der Stellring mit Stellhebeln der Leitschaufeln in Wirkverbindung steht. Eine Lagerung des Verstellrings am Schaufellagerring erfolgt dabei über Rollen. Die Rollen selbst weisen in einem Stück mit Ihnen gefertigte axiale Verlängerungen auf, welche in entsprechende Bohrungen im Düsenring und/oder in einem Gehäuseteil eingeführt und dort frei drehbar gelagert sind. Die axialen Verlängerungen weisen dabei einen Durchmesser auf, der kleiner ist als der Durchmesser der eigentlichen Rollen. Eine derartige variable Turbinen- oder Verdichtergeometrie ist vergleichsweise aufwändig zu fertigen, da zum einen entsprechende Bohrungen im Düsenring bzw. im Gehäuse eingebracht und zum anderen die einzelnen Rollen individuell montiert werden müssen. Von weiterem großem Nachteil ist dabei, dass die variable Turbinen- oder Verdichtergeometrie nicht als vormontierte Einheit mit Schaufellagerring, Rollen, Leitschaufeln und Verstellring gefertigt und als Einheit im Turbinengehäuse eingebaut werden kann.

Aus der US 7,406,826 B2 ist ebenfalls eine variable Turbinen- oder Verdichtergeometrie für einen Abgasturbolader bekannt, bei welchem der Verstellring jedoch über eine Gleitlagerung gegenüber dem Schaufellagerring gelagert ist.

Aus der DE 102 09 444 A1 ist ebenfalls eine variable Turbinen- oder Verdichtergeometrie für einen Abgasturbolader bekannt.

Die vorliegende Erfindung beschäftigt sich daher mit dem Problem, für eine variable Turbinen- oder Verdichtergeometrie der gattungsgemäßen Art eine verbesserte oder zumindest eine alternative Ausführungsform anzugeben, die insbesondere eine einfache, kostengünstige und vor allem separate Vorfertigung ermöglicht.

Dieses Problem wird erfindungsgemäß durch die Gegenstände der unabhängigen Ansprüche gelöst. Vorteilhafte Ausführungsformen sind Gegenstand der abhängigen Ansprüche.

Die vorliegende Erfindung beruht auf dem allgemeinen Gedanken, einzelne Rollen einer Rollenlagerung eines Verstellrings an einem Schaufellagerring einer variablen Turbinen- oder Verdichtergeometrie nicht mehr über einen entsprechenden axialen Fortsatz im Schaufellagerring drehbar zu lagern, sondern jede Rolle mit zwei Führungs- /Laufkragen (Spurkränzen) auszustatten und eine komplementär hierzu ausgebildete Schiene am Schaufellagerring vorzusehen.

Bei einer vorteilhaften Weiterbildung der erfindungsgemäßen Lösung ist an zumindest einer Rolle ein Axialfortsatz als Axialanschlag am Schaufellagerring angeordnet. Der Axialfortsatz kann dabei beispielsweise über eine spezielle Beschichtung verfügen, welche die Gleiteigenschaften deutlich verbessert, sodass der Axialfortsatz jeder Rolle vergleichsweise leicht über eine Oberfläche des Schaufellagerrings gleitet.

Bei einer vorteilhaften Weiterbildung der erfindungsgemäßen Lösung weist die Schiene am Schaufellagerring zumindest eine Ausnehmung auf, durch welche ein Einführen der Rolle möglich ist. Eine Montage der variablen Turbinen- oder Verdichtergeometrie erfolgt dabei in der Art eines Bajonettverschlusses, bei welchem zunächst die einzelnen Rollen in die jeweils zugehörigen Rolleneingriffe am Verstellring eingelegt und anschließend der Verstellring derart zum Schaufellagerring positioniert wird, dass die Rolleneingriffe und die Ausnehmungen am Schaufellagerring ein Einführen der Rollen in die Schiene des Schaufellagerrings ermöglichen. Anschließend wird der Verstellring in der Art eines Bajonettverschlusses verdreht, wobei nunmehr die Rollen aufgrund ihrer Führungs-/Laufkragen den Verstellring am Schaufellagerring fixieren. Nun werden noch die einzelnen Leitschaufeln mit ihren Schaufellagerzapfen durch den Schaufellagerring gesteckt und anschließend die Stellhebel auf die der jeweiligen Leitschaufel abgewandten Enden der Schaufellagerzapfen derart aufgesteckt, dass sie mit dem Verstellring in Wirkverbindung stehen. Dies kann beispielsweise derart gestaltet sein, dass jeder Stellhebel eine gabelförmige Ausnehmung aufweist, in welche ein zugehöriger Zapfen des Verstellrings eingreifen muss, um beim Verdrehen des Verstellrings ein simultanes Verstellen der Leitschaufeln zu ermöglichen.

Die vorliegende Erfindung beruht weiter auf dem allgemeinen Gedanken, dass Turbolader mit einer solchen variablen Turbinen- oder Verdichtergeometrie auszustatten, wobei die erfindungsgemäße variable Turbinen- oder Verdichtergeometrie beispielsweise als separate Baueinheit vorgefertigt und erst in einem späteren Montageschritt in einem Verdichtergehäuse bzw. einem Turbinengehäuse des Abgasturboladers montiert werden kann.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch,
- Fig. 1: eine Schnittdarstellung durch eine erfindungsgemäße variable Turbinen- oder Verdichtergeometrie im Bereich einer Rolle,
- Fig. 2: eine Darstellung wie in Fig. 1, jedoch zusätzlich mit Stellhebeln und Leitschaufeln,
- Fig. 3: eine teilweise Ansicht auf die variable Turbinen- oder Verdichtergeometrie, jedoch ohne Leitschaufeln,
- Fig. 4: eine Darstellung wie in Fig. 2, jedoch ohne Rolle,
- Fig. 5: eine Darstellung wie in Fig. 3, jedoch ebenfalls ohne Rolle.

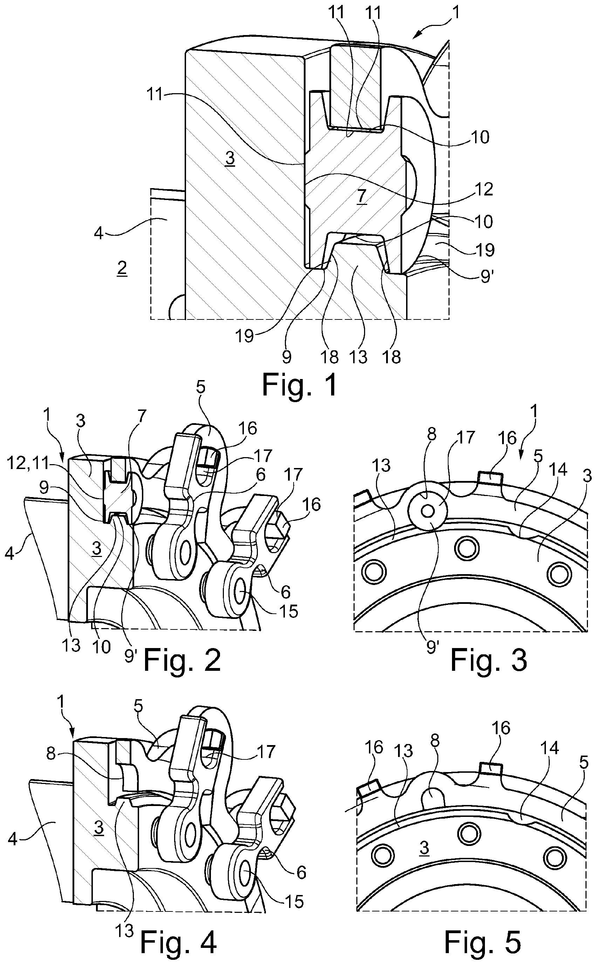

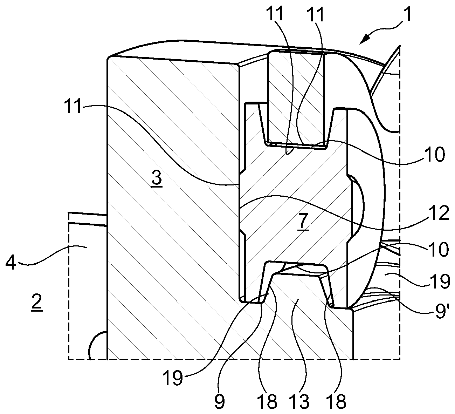

Entsprechend den Figuren 1, 2 und 4 weist eine erfindungsgemäße variable Turbinen- oder Verdichtergeometrie 1 für einen Abgasturbolader 2 einen Schaufellagerring 3 auf, an/in dem Leitschaufeln 4 drehbar gelagert sind. Ebenso vorgesehen ist ein Verstellring 5 zum simultanen Verstellen der Leitschaufeln 4, wobei der Verstellring 5 mit Stellhebeln 6 der Leitschaufeln 4 in Wirkverbindung steht. Eine Lagerung des Verstellrings 5 am Schaufellagerring 3 erfolgt dabei über Rollen 7. Erfindungsgemäß ist nun an dem Verstellring 5 für jede Rolle 7 ein separater Rolleneingriff 8 (vgl. insbesondere auch die Fig. 4 und 5) vorgesehen, in welchen in jeweilige Rolle 7 nicht nur geführt ist, sondern auch abrollt, d.h. bei einem Verdrehen des Verstellrings 5 relativ zum Schaufellagerring 3 mitgeführt wird. Betrachtet man die Rollen 7 genauer, so kann man erkennen, dass dieses jeweils zwei Führungs-/ Laufkragen 9, 9' aufweisen, zwischen denen eine Nut 10 verläuft und auf denen die Rolle 7 am Schaufellagerring 3 abrollt. Hierdurch ist es möglich, einen vergleichsweise kleinen Rollwiderstand zu realisieren, da die jeweiligen Rollen 7 ausschließlich über die vergleichsweise kleinen Außenmantelflächen der Führungs-/Laufkragen 9, 9' am Schaufellagerring 3 abrollen. Am Schaufellagerring 3 ist darüber hinaus eine Schiene 13 angeordnet, die in die Nut 10 zwischen die beiden Führungs-/Laufkragen 9, 9' der Rolle 7 eingreift. Der Verstellring 5 gleitet dabei über seinen Rolleneingriff 8 entlang der Nut 10, sodass es hier beispielsweise von Vorteil ist, sofern an einer der Kontaktflächen an der Rolle 7 bzw. an dem Rolleneingriff 8 eine gleitwiderstandsreduzierende Beschichtung 11 angeordnet ist.

Betrachtet man insbesondere die Figuren 1 und 2, so kann man erkennen, dass jede Rolle 7 ausschließlich über ihre beiden Führungs-/Laufkragen 9, 9' am Schaufellagerring 3 und am Verstellring 5 gehalten ist, was darüber hinaus den großen Vorteil bietet, dass die variable Turbinen- oder Verdichtergeometrie 1 als separate und insbesondere auch als vorfertigbare Baueinheit herstellbar ist. An zumindest einer Rolle 7 ist darüber hinaus ein Axialfortsatz 12 (Fig. 1) als Axialanschlag am Schaufellagerring 3 angeordnet, wobei hier ebenfalls zur leichtgängigen Lagerung eine den Gleitwiderstand reduzierende Beschichtung 11 aufgebracht sein kann. Die Beschichtung 11 kann dabei am Axialfortsatz 12 und/oder an einer zugehörigen Fläche am Schaufellagerring 12 aufgebracht werden.

Betrachtet man nochmals die Figur 1, so kann man erkennen, dass die beiden Führungs-/Laufkragen 9, 9' konische Innenflanken 18 aufweisen, die konischen Außenflanken 19 der Schiene 13 am Schaufellagerring 3 jeweils gegenüberliegen. Die konischen Innenflanken 18 am Führungs-/Laufkragen 9, 9' sind dabei jedoch steiler ausgebildet als die konischen Außenflanken 19 an der Schiene 13. Dies bietet beispielsweise den Vorteil, dass die jeweilige Rolle 7 ausschließlich über einen minimalen Bereich zwischen der Innenflanke 18 und der zugehörigen Außenflanke 19 der Schiene 13 in Kontakt tritt. Zugleich ermöglicht die konische Innenflanke 18 der Rolle 7 ein Führen des Verstellrings 5.

Um ein möglichst einfaches Zusammenbauen der erfindungsgemäßen variablen Turbinen- oder Verdichtergeometrie 1 zu ermöglichen, weist die Schiene 13 am Schaufellagerring 3 zumindest eine Ausnehmung 14 auf, durch welche ein Einführen der Rolle 7 möglich ist. Eine Montage der erfindungsgemäßen variablen Turbinen- oder Verdichtergeometrie erfolgt dabei wie folgt: zunächst werden die Rollen 7 in die zugehörigen Rolleneingriffe 8 des Verstellrings 5 eingelegt, wobei anschließend der Verstellung 5 derart zum Schaufellagerring 3 positioniert wird, dass die Rolleingriffe 8 und die Ausnehmungen 14 am Schaufellagerring 3 ein Einführen der Rollen 7 in die Schiene 13 des Schaufellagerrings 3 ermöglichen. Ist der Verstellring 5 axial soweit verstellt, dass die einzelnen Rollen 7 mit ihren Führungs-/Laufkragen 9, 9' die Schiene 13 umfassen, wird der Verstellring 5 relativ zum Schaufellagering 3 verdreht, wodurch eine Art Bajonettverschluss zwischen dem Verstellring 5 und dem Schaufellagerring 3 hergestellt wird. Anschließend werden die Leitschaufeln 4 mit ihren Schaufellagerzapfen 15 durch zugehörige Öffnungen im Schaufellagerring 3 gesteckt und die Stellhebel 6 derart auf die Schaufellagerzapfen 15 gesteckt, dass sie mit dem Verstellring 5 in Wirkverbindung stehen. Dies kann beispielsweise dadurch erfolgen, dass der Verstellring 5 mit entsprechend an diesem angeordneten Zapfen 16 in zugehörige Ausnehmungen 17 des jeweiligen Stellhebels 6 eingreift. Nunmehr ist die variable Turbinen- oder Verdichtergeometrie fertiggestellt und kann als vorgefertigte, separate Baueinheit einem weiteren Montageprozess zur Herstellung des Abgasturboladers 2 zugeführt werden.

Mit der erfindungsgemäßen variablen Turbinen- oder Verdichtergeometrie 1 ist es möglich, diese separat vorzufertigen und zudem eine Rollenlagerung eines Verstellrings 5 an einem Schaufellagerring 3 ohne hohen konstruktiven Aufwand und damit mit geringen Fertigungskosten zu erreichen.

## Patentansprüche

1. Variable Turbinen- oder Verdichtergeometrie (1) für einen Abgasturbolader (2),
- mit einem Schaufellagerring (3), in/an dem Leitschaufeln (4) drehbar gelagert sind,
- mit einem Verstellring (5) zum simultanen Verstellen der Leitschaufeln (4), wobei der Verstellring (5) mit Stellhebeln (6) der Leitschaufeln (4) in Wirkverbindung steht,
- wobei der Verstellring (5) über Rollen (7) am Schaufellagerring (3) gelagert ist,
- wobei an dem Verstellring (5) für jede Rolle (7) ein Rolleneingriff (8) vorgesehen ist, in welchem die jeweilige Rolle (7) geführt ist und abrollt,
- wobei jede Rolle (7) zwei Führungs-/Laufkragen (9,9') aufweist, zwischen denen eine Nut (10) verläuft und auf denen die Rolle (7) am Schaufellagerring (3) abrollt,
- wobei am Schaufellagerring (3) eine Schiene (13) angeordnet ist, die in die Nut (10) zwischen die beiden Führungs-/Laufkragen (9,9') eingreift,
- wobei jede Rolle (7) ausschließlich über ihre Führungs-/Laufkragen (9,9') am Schaufellagerring (3) gehalten ist,
- wobei jede Rolle (7) ausschließlich über ihre Führungs-/Laufkragen (9,9') bzw. über die Nut (10) am Verstellring (5) gehalten ist.

2. Variable Turbinen- oder Verdichtergeometrie nach Anspruch 1,
**dadurch gekennzeichnet, dass**
an zumindest einer Rolle (7) ein Axialfortsatz (12) als Axialanschlag am Schaufellagerring (3) angeordnet ist.

3. Variable Turbinen- oder Verdichtergeometrie nach Anspruch 1 oder 2,
**dadurch gekennzeichnet, dass**
die Schiene (13) am Schaufellagerring (3) zumindest eine Ausnehmung (14) aufweist, durch welche ein Einführen der Rolle (7) möglich ist.

4. Variable Turbinen- oder Verdichtergeometrie nach einem der Ansprüche 1 bis 3,
**dadurch gekennzeichnet, dass**
die beiden Führungs-/Laufkragen (9,9') konische Innenflanken (18) aufweisen.

5. Variable Turbinen- oder Verdichtergeometrie nach einem der vorhergehenden Ansprüche,
**dadurch gekennzeichnet, dass**
die Schiene (13) am Schaufellagerring (3) konische Außenflanken (19) aufweist.

6. Variable Turbinen- oder Verdichtergeometrie nach Anspruch 5,
**dadurch gekennzeichnet, dass**
die konischen Innenflanken (18) am Führungs-/Laufkragen (9,9') steiler ausgebildet sind als die konischen Außenflanken (19) an der Schiene (13).

7. Abgasturbolader (2) mit einer variablen Turbinen- oder Verdichtergeometrie (1) nach einem der vorhergehenden Ansprüche.

8. Verfahren zur Montage einer variable Turbinen- oder Verdichtergeometrie (1) nach einem der Ansprüche 3 bis 6, bei dem
- die Rollen (7) in die zugehörigen Rolleneingriffe (8) des Verstellrings (5) eingelegt werden,
- der Verstellring (5) derart zum Schaufellagerring (3) positioniert wird, dass die Rolleneingriffe (8) und die Ausnehmungen (14) am Schaufellagerring (3) ein Einführen der Rollen (7) in die Schiene (13) des Schaufellagerrings (3) ermöglichen,
- der Verstellring (5) verdreht wird,
- die Leitschaufeln (4) mit ihren Schaufellagerzapfen (15) in den Schaufellagerring (3) gesteckt und die Stellhebel (6) auf die Schaufellagerzapfen (15) derart aufgesteckt werden, dass sie mit dem Verstellring (5) in Wirkverbindung stehen.

## Claims

1. Variable turbine or compressor geometry (1) for an exhaust gas turbocharger (2),
- having a blade bearing ring (3), in/on which guide blades (4) are rotatably mounted,
- having an adjustment ring (5) for simultaneous adjustment of the guide blades (4), the adjustment ring (5) being in operative connection with adjusting levers (6) of the guide blades (4),
- the adjustment ring (5) being mounted on the blade bearing ring (3) via rollers (7),
- wherein a roller engagement (8) is provided for each roller (7) on the adjustment ring (5), the respective roller (7) being guided in and rolling on the respective roller engagement,
- wherein each roller (7) has two guide/run collars (9,9'), between which a groove (10) runs and on which the roller (7) rolls on the blade bearing ring (3),
- wherein a rail (13) is arranged on the blade bearing ring (3), the rail engaging in the groove (10) between the two guide/run collars (9,9'),
- wherein each roller (7) is retained on the blade bearing ring (3) exclusively via its guide/run collars (9,9'),
- wherein each roller (7) is retained on the adjustment ring (5) exclusively via its guide/run collars (9,9') or via the groove (10).

2. Variable turbine or compressor geometry according to claim 1,
**characterised in**
**that** an axial extension (12) is arranged on at least one roller (7) as axial stop on the blade bearing ring (3).

3. Variable turbine or compressor geometry according to claim 1 or 2,
**characterised in**
**that** the rail (13) has on the blade bearing ring (3) at least one recess (14), through which an introduction of the roller (7) is possible.

4. Variable turbine or compressor geometry according to any of claims 1 to 3,
**characterised in**
**that** the two guide/run collars (9,9') have conical inner flanks (18).

5. Variable turbine or compressor geometry according to any of the preceding claims,
**characterised in**
**that** the rail (13) has conical outer flanks (19) on the blade bearing ring (3).

6. Variable turbine or compressor geometry according to claim 5,
**characterised in**
**that** the conical inner flanks (18) on the guide/run collars (9,9') are steeper than the conical outer flanks (19) on the rail (13).

7. Exhaust gas turbocharger (2) with a variable turbine or compressor geometry (1) according to any of the preceding claims.

8. Method for the assembly of a variable turbine or compressor geometry (1) according to any of claims 3 to 6, in which
- the rollers (7) are inserted into the associated roller engagements (8) of the adjustment ring (5),
- the adjustment ring (5) is positioned in relation to the blade bearing ring (3), such that the roller engagements (8) and the recesses (14) on the blade bearing ring (3) make it possible for the rollers (7) to be introduced into the rail (13) of the blade bearing ring (3),
- the adjustment ring (5) is turned,
- the guide blades (4), with their blade bearing trunnions (15), are inserted into the blade bearing ring (3) and the adjusting levers (6) are attached to the blade bearing trunnions (15) in such a way that they are in operative contact with the adjustment ring (5).

## Revendications

1. Géométrie de turbine ou de compresseur variable (1) pour un turbocompresseur (2)
- avec une bague de support d'aube (3) dans/sur laquelle des aubes directrices (4) sont logées de manière à pouvoir tourner,
- avec un anneau de réglage (5) pour le réglage simultané des aubes directrices (4), dans laquelle l'anneau de réglage (5) est en liaison active avec des leviers de réglage (6) des aubes directrices (4),
- dans laquelle l'anneau de réglage (5) est logé par le biais de rouleaux (7) sur la bague de support d'aube (3),
- dans laquelle une prise de rouleau (8) est prévue sur l'anneau de réglage (5) pour chaque rouleau (7), dans laquelle le rouleau respectif (7) est guidé et se déroule,
- dans laquelle chaque rouleau (7) présente deux collets de guidage/de roulement (9, 9'), entre lesquels une rainure (10) s'étend et sur lesquels le rouleau (7) se déroule sur la bague de support d'aube (3),
- dans laquelle un rail (13) est agencé sur la bague de support d'aube (3), lequel vient en prise dans la rainure (10) entre les deux collets de guidage/de roulement (9, 9'),
- dans lequel chaque rouleau (7) est maintenu exclusivement par le biais de ses collets de guidage/de roulement (9, 9') sur la bague de support d'aube (3),
- dans lequel chaque rouleau (7) est maintenu exclusivement par le biais de ses collets de guidage/de roulement (9, 9') ou par le biais de la rainure (10) sur l'anneau de réglage (5).

2. Géométrie de turbine ou de compresseur variable selon la revendication 1,
**caractérisée en ce que**
sur au moins un rouleau (7) un prolongement axial (12) est agencé en tant que butée axiale sur la bague de support d'aube (3).

3. Géométrie de turbine ou de compresseur variable selon la revendication 1 ou 2,
**caractérisée en ce que**
le rail (13) présente sur la bague de support d'aube (3) au moins un évidement (14) par lequel une introduction du rouleau (7) est possible.

4. Géométrie de turbine ou de compresseur variable selon l'une quelconque des revendications 1 à 3,
**caractérisée en ce que**
les deux collets de guidage/de roulement (9, 9') présentent des flancs intérieurs coniques (18).

5. Géométrie de turbine ou de compresseur variable selon l'une quelconque des revendications précédentes,
**caractérisée en ce que**
le rail (13) présente sur la bague de support d'aube (3) des flancs extérieurs coniques (19).

6. Géométrie de turbine ou de compresseur variable selon la revendication 5,
**caractérisée en ce que**
les flancs intérieurs coniques (18) sont réalisés plus abruptes sur le collet de guidage/de roulement (9, 9') que les flancs extérieurs (19) coniques sur le rail (13).

7. Turbocompresseur (2) avec une géométrie de turbine ou de compresseur variable (1) selon l'une quelconque des revendications précédentes.

8. Procédé de montage d'une géométrie de turbine ou de compresseur variable (1) selon l'une quelconque des revendications 3 à 6, pour lequel
- les rouleaux (7) sont insérés dans les prises de rouleau (8) afférentes de l'anneau de réglage (5),
- l'anneau de réglage (5) est positionné par rapport à la bague de support d'aube (3) de telle manière que les prises de rouleau (8) et les évidements (14) sur la bague de support d'aube (3) permettent une introduction des rouleaux (7) dans le rail (13) de la bague de support d'aube (3),
- l'anneau de réglage (5) est tourné,
- les aubes directrices (4) sont enfichées avec leurs tenons de support d'aube (15) dans la bague de support d'aube (3) et les leviers de réglage (6) sont enfichés sur les tenons de support d'aube (15) de telle manière qu'ils se trouvent en liaison active avec l'anneau de réglage (5).
